# EUROPEAN PATENT SPECIFICATION

(11) **EP 4 723 609 B1**
(45) Date of publication and mention of the grant of the patent: **11.11.2026**
(21) Application number: 25203380.8
(22) Date of filing: 19.09.2025
(51) Int. Cl.: H04N 1/00

(54) **DOCUMENT CONVEYING APPARATUS, IMAGE PROCESSING APPARATUS, AND DOCUMENT CONVEYING METHOD**
DOKUMENTFÖRDERVORRICHTUNG, BILDVERARBEITUNGSVORRICHTUNG UND DOKUMENTFÖRDERVERFAHREN
APPAREIL DE TRANSPORT DE DOCUMENTS, APPAREIL DE TRAITEMENT D'IMAGES ET PROCÉDÉ DE TRANSPORT DE DOCUMENTS

(30) Priority: 27.09.2024 JP 2024168326
(43) Date of publication of application: 08.04.2026
(73) Proprietor: KYOCERA Document Solutions Inc., Osaka-shi, Osaka 540-8585 (JP)
(72) Inventor: Kadobayashi, Mizue, Osaka-shi, 540-8585 (JP); Ogawa, Shikitaro, Osaka-shi, 540-8585 (JP)
(74) Representative: Plougmann Vingtoft a/s

(56) References cited:
- JP-A- 2009 007 108
- US-A1- 2007 229 865
- US-A1- 20240 051 781
- US-B2- 10 917 528

## Description

### INCORPORATION BY REFERENCE

This application is based upon and claims the benefit of priority from the corresponding Japanese Patent Application No. 2024-168326 filed on September 27, 2024.

The present disclosure relates to a document conveying apparatus, an image processing apparatus, and a document conveying method.

### BACKGROUND

Generally, a document conveying apparatus is known that includes a document placement portion on which a document is placed to be conveyed toward an image reading portion that reads an image from the document, and a document discharge portion to which the document is discharged after the image has been read by the image reading portion. Note that in this type of document conveying apparatus, a conveying operation by the document conveying apparatus may stop when a sensor detects a full-load state in which documents placed on the document discharge portion have reached a preset specified amount. Further prior art is known from US 2024/051781.

### SUMMARY

A document conveying apparatus according to one aspect of the present disclosure includes a conveying mechanism, a first detection processing portion, a second detection processing portion, and a stop processing portion. The conveying mechanism is configured to convey documents placed on a document placement portion to a document discharge portion in sequence through an image reading position where images are read from the documents in a specific job. The first detection processing portion detects whether or not a document is placed on the document discharge portion. The second detection processing portion detects whether or not an amount of documents placed on the document discharge portion has reached a preset specified amount. The stop processing portion executes a stop process to stop a document conveying operation by the conveying mechanism in a case in which the second detection processing portion determines that the amount of the documents placed on the document discharge portion has reached the specified amount. The stop processing portion, in a case in which the first detection processing portion detects that no document is placed on the document discharge portion when the specific job is started, limits execution of the stop process during execution of the specific job.

An image processing device according to another aspect of the present disclosure includes the document conveying apparatus and an image reading portion configured to read an image from a document conveyed by the document conveying apparatus.

A document conveying method relating to another aspect of the present disclosure is a method in which one or more processors that control a document conveying apparatus having a conveying mechanism that sequentially conveys documents placed on a document placement portion to a document discharge portion through an image reading position where images are read from the documents in a specific job, execute a first detection step, a second detection step, and a stopping step. The first detection step detects whether or not a document is placed on the document discharge portion. The second detection step detects whether or not an amount of documents placed on the document discharge portion has reached a preset specified amount. The stopping step, in a case in which it is determined in the second detection step that the amount of the documents placed on the document discharge portion has reached the specified amount, executes a stop process of stopping a document conveying operation by the conveying mechanism; The stopping step, in a case in which the first detection step detects that no document is placed on the document discharge portion when the specific job is started, limits execution of the stop process during execution of the specific job.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a schematic diagram showing a configuration of an image processing apparatus of an embodiment according to the present disclosure.
FIG. 2 is a schematic block diagram of an image processing apparatus of an embodiment according to the present disclosure.
FIG. 3 is a schematic diagram showing a configuration of a document conveying apparatus of an embodiment according to the present disclosure.
FIG. 4 is a flowchart showing an example of processing executed by the image processing apparatus of an embodiment according to the present disclosure.
FIG. 5 is a flowchart showing an example of processing executed by the image processing apparatus of an embodiment according to the present disclosure.

### DETAILED DESCRIPTION

Hereinafter, embodiments of a technique according to the present disclosure will be described with reference to the accompanying drawings. The following embodiments are examples of the technique according to the present disclosure and are not intended to limit the technical scope of the present disclosure.

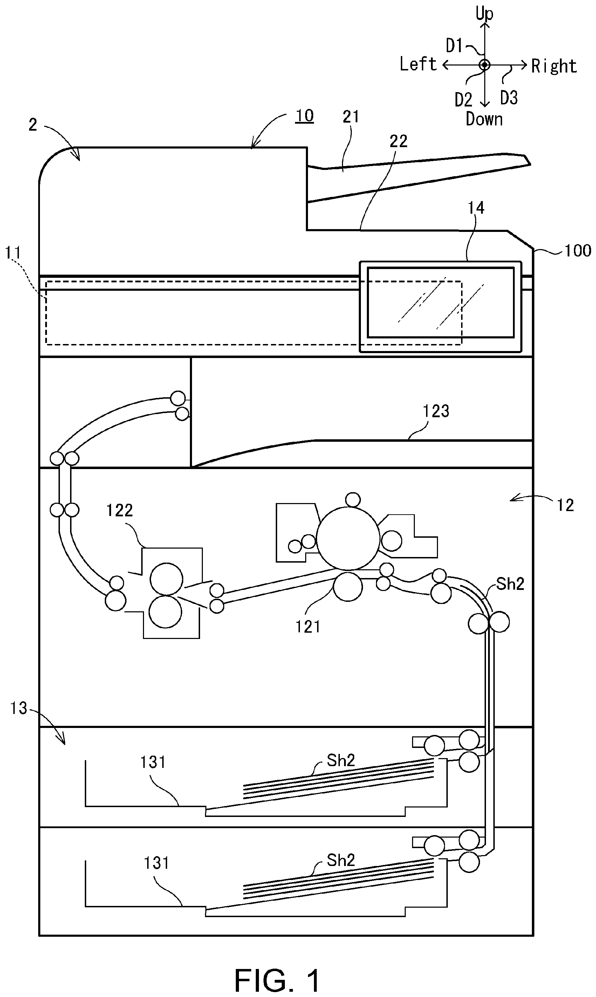

First, an overall configuration of an image processing apparatus 10 of the present embodiment will be described with reference to FIGS. 1 to 3.

For ease of explanation, a vertical direction in an installation state in which the image processing apparatus 10 is usable (state shown in FIG. 1) is defined as an up-down direction D1. In addition, a direction perpendicular to a plane of the paper on which the image processing apparatus 10 is shown in FIG. 1 is defined as a front-rear direction D2, and a surface on the near side in FIG. 1 is defined as a front surface (front face). Furthermore, the left side of the paper in FIG. 1 is taken as the left side surface, and defines a left-right direction D3.

### [Image Processing Apparatus]

The image processing apparatus 10 according to the present embodiment is, as an example, a multifunction peripheral having a function of executing a plurality of jobs, such as a scanning job for acquiring an image (image data) from a document, a printing job for forming an image based on image data, a facsimile job, and a copying job. The image processing apparatus 10 may be a scanner, a facsimile machine, a copier, or the like capable of executing at least a scanning job.

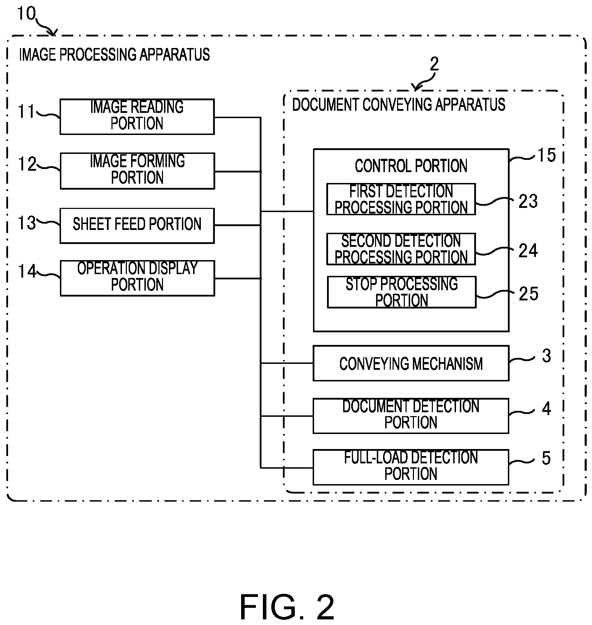

As shown in FIGS. 1 and 2, the image processing apparatus 10 includes a document conveying apparatus 2, an image reading portion 11, an image forming portion 12, a sheet feed portion 13, an operation display portion 14, and a control portion 15. In the present embodiment, as shown in FIG. 1, the image processing apparatus 10 includes a housing 100. An ADF 2, the image reading portion 11, the image forming portion 12, the sheet feed portion 13, the operation display portion 14, and the control portion 15 are provided in the housing 100.

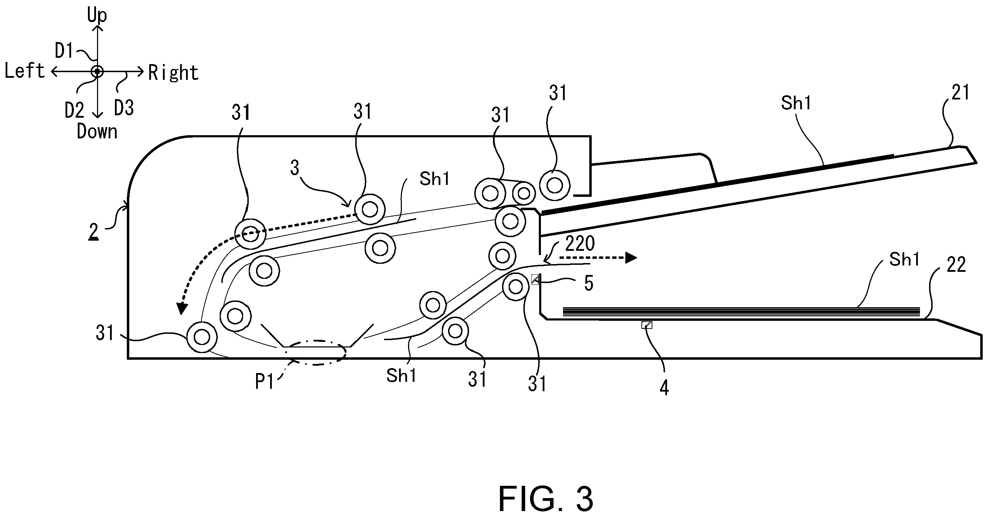

In the present embodiment, the document conveying apparatus 2 is an automatic document feeder (ADF). The document conveying apparatus 2 conveys a document Sh1 as a reading object whose image is to be read by the image reading portion 11. As shown in FIG. 3, the document conveying apparatus 2 includes a document placement portion 21, a document discharge portion 22, a conveying mechanism 3, a document detection portion 4, a full-load detection portion 5, and the like. The document conveying apparatus 2, by driving the conveying mechanism 3, conveys the document Sh1 placed on the document placement portion 21 to the document discharge portion 22, passing through an image reading position of the image reading portion 11.

The image reading portion 11 reads an image from the document Sh1 (document) and outputs image data corresponding to the read image. The image reading portion 11 includes a document table, a light source, a plurality of mirrors, an optical lens, a charge coupled device (CCD), and the like. For example, the image reading portion 11 reads an image from the document Sh1 when the document Sh1 is conveyed by the document conveying apparatus 2 and passes through an image reading position P1 (see FIG. 3).

The image forming portion 12 forms an image on a sheet Sh2 based on image data output from the image reading portion 11. In addition, the image forming portion 12 forms an image on the sheet Sh2 based on image data input to the image processing apparatus 10 from an information processing apparatus such as a personal computer. As an example, in the present embodiment, as shown in FIG. 1, the image forming portion 12 includes a transfer device 121, a fixing device 122, and a document discharge portion 123, and forms an image on the sheet Sh2 by electrophotography. The image forming portion 12 is not limited to a configuration for forming a monochrome image, and the configuration may be a configuration for forming a full-color image using four colors, C (cyan), M (magenta), Y (yellow) and K (black). In addition, the image forming portion 12 may be configured to form an image on a sheet by an image forming method other than electrophotography, such as an inkjet method.

The sheet feed portion 13 supplies the sheet Sh2 to the image forming portion 12. The paper feed portion 13 includes a plurality of sheet feed cassettes 131, a manual feed tray, a plurality of conveying rollers, and the like. The sheet feed portion 13 conveys the sheet Sh2 from a plurality of sheet feed cassettes 131 or a manual feed tray or the like through a conveying path using a plurality of conveying rollers or the like, and supplies the sheet Sh2 to the image forming portion 12. The image forming portion 12 forms an image on the sheet Sh2 that is supplied from the sheet feed portion 13 via the conveying path.

The operation display portion 14 is a user interface in the image processing apparatus 10. The operation display portion 14 has a display portion such as a liquid-crystal display that displays various types of information in response to control instructions from the control portion 15, and an operation portion such as a switch or touch panel that inputs various types of information to the control portion 15 in response to user operation. In addition, the image processing apparatus 10 may include, in addition to or instead of the operation display portion 14, for example, an audio output portion and an audio input portion as a user interface. Moreover, the operation display portion 14 may be, for example, an external device provided separately from the housing 100; and in this case, the image processing apparatus 10 may use the operation display portion 14 as a user interface by executing data communication with the external device.

The control portion 15 performs overall control of the image processing apparatus 10. The control portion 15 mainly includes a computer system having one or more processors and one or more memories. In the image processing apparatus 10, one or more processors execute programs to achieve the functions of the control portion 15. The program may be pre-recorded in one or more memories, or may be provided via a telecommunications line such as the Internet, or may be recorded and provided on a non-transitory recording medium readable by a computer system, such as a memory card or an optical disk. The one or more processors are configured by one or more electronic circuits including semiconductor integrated circuits. Furthermore, a computer system as referred to in the present disclosure includes a microcontroller having one or more processors and one or more memories. The control portion 15 may be a control portion provided separately from a main control portion that performs overall control of the image processing apparatus 10.

In addition, the image processing device 10 further includes a storage portion, a communication portion, a power supply portion, and the like. The storage portion includes one or more non-volatile memories, and stores in advance information such as control programs for causing the control portion 15 to execute various types of processes. The communication portion is an interface that executes data communication between the image processing apparatus 10 and an external device connected via a communication network such as the Internet or a local area network (LAN). The power supply portion is a power supply circuit that generates (outputs) power for the operation of the image processing apparatus 10.

### [Document Conveying Apparatus]

Next, a configuration of the document conveying apparatus 2 according to this embodiment will be described in more detail with reference to FIG. 3.

The document conveying apparatus 2 is an apparatus that conveys the document Sh1 from the document placement portion 21 to the document discharge portion 22. In addition, in the present embodiment, the document Sh1 is paper as an example, but is not limited to paper and may be, for example, another sheet such as a resin film.

The document placement portion 21 is a member on which the document Sh1 to be conveyed by the document conveying apparatus 2 is placed. In the present embodiment, the document Sh1 conveyed by the document conveying apparatus 2 is a target for image reading by the image reading portion 11. Note that the document placement portion 21 is provided with a document placement detection portion (not shown) that detects when the document Sh1 is placed on the document placement portion 21, and the control portion 15 can detect the presence or absence of the document Sh1 on the document placement portion 21 using the document placement detection portion.

On the document placement portion 21, a document Sh1 of various sizes (paper sizes) can be set, such as A3E (A3 size horizontal), B4E (A4 size horizontal), 2L size, L size, postcard, business card, and the like. The document placement portion 21 has a pair of cursors facing each other in the front-rear direction D2, and a distance between the pair of cursors is adjusted to match the dimension of the document Sh1 set in a horizontal direction (here, the front-rear direction D2) perpendicular to a vertical direction (conveying direction).

On the document placement portion 21, one or more sheets Sh1 to be transported by the document conveying apparatus 2 are set in a placed state. When a plurality of documents Sh1 are set on the document placement portion 21, the plurality of documents Sh1 are placed on the document placement portion 21 in a state where they overlap in the up-down direction D1, that is, in a stacked state.

In the image processing apparatus 10, the amount of documents that can be placed on the document placement portion 21 (hereinafter referred to as the "maximum placement amount") is preset. In the document placement portion 21, the amount of documents that can be placed on the document placement portion 21 is limited to the maximum placement amount by the cursor. For example, the cursor is provided with a limiting portion that limits the height of the document that can be placed on the document placement portion 21 to a height that corresponds to the maximum placement amount.

The document discharge portion 22 is a member on which the document Sh1 conveyed by the document conveying apparatus 2 is discharged and placed. The document discharge portion 22 is located below the document placement portion 21. The document conveying apparatus 2 conveys the document Sh1 placed on the document placement portion 21 through an image reading position P1 where image processing is performed by an image processing portion, and discharges the document Sh1 onto the document discharge portion 22. In the present embodiment, the document Sh1 conveyed by the document conveying apparatus 2 is a target for image reading by the image reading portion 11, and thus the document Sh1 after the image reading by the image reading portion 11 is discharged onto an upper surface of the document discharge portion 22.

Here, similar to the document placement portion 21, it is possible to place documents Sh1 of various sizes (paper sizes) on the document discharge portion 22. Furthermore, in a case in which a plurality of sheets of documents Sh1 are discharged to the document discharge portion 22, similar to the document placement portion 21, the plurality of sheets of documents Sh1 are placed on the document placement portion 22 in a stacked state in the up-down direction D1.

In the image processing apparatus 10, the amount of documents that can be placed on the document discharge portion 22 (hereinafter, referred to as the "specified amount") is preset. The image processing apparatus 10 is provided with a full-load detection portion 5, which will be described later, that detects whether the height of the document Sh1 placed on the document discharge portion 22 has reached a specific height corresponding to the specified amount. Note that in this embodiment, the specified amount is equal to or greater than the maximum placement amount.

The conveying mechanism 3 conveys the documents Sh1 placed on the document placement portion 21 to the document discharge portion 22 in sequence through an image reading position P1 where the images of the documents Sh1 are read. More specifically, as shown by the dashed arrow in FIG. 3, the conveying mechanism 3 conveys the document Sh1 from the document placement portion 21 to the left, then downward, turns around to the right, and discharges the document Sh1 onto the document discharge portion 22 through the image reading position P1.

The conveying mechanism 3 includes, for example, a plurality of conveying rollers 31 and a power source. The conveying mechanism 3, by driving each of the plurality of conveying rollers 31 using the power of the power source, which may include a motor as an example, conveys the documents Sh1 set on the document placement portion 21 one sheet at a time through the image reading position P1 to the document discharge portion 22. For example, when a predetermined number of documents Sh1 to be the subject of a job are set on the document placement portion 21, the conveying mechanism 3 conveys these predetermined number of documents Sh1 one by one until all of the predetermined number of documents Sh1 are discharged onto the document discharge portion 22. Thus, the predetermined number of documents Sh1 to be the subject of the job are moved from the document placement portion 21 onto the document discharge portion 22 located below the document placement portion 21.

The document detection portion 4 is provided in the document discharge portion 22 and is used to detect whether or not the document Sh1 is placed on the document discharge portion 22. More specifically, the document detection portion 4 is an optical sensor that includes a light emitting portion that emits light upward from the placement area of the document Sh1 on the document discharge portion 22 and a light receiving portion that receives light from above the document discharge portion 22. The document detection portion 4 inputs an H signal indicating that the document Sh1 is placed on the document discharge portion 22 to the control portion 15 in a case in which the document Sh1 is placed on the document discharge portion 22, the light emitted from the light emitting portion is reflected by the document Sh1, and a predetermined amount of light is received by the light receiving portion. In addition, the document detection portion 4 may be another sensor such as an ultrasonic sensor or a contact sensor.

The full-load detection portion 5 is located below a discharge port 220 through which the document Sh1 is discharged from the conveying mechanism 3 toward the document discharge portion 22, at a position where full-load detection portion 5 can detect the presence or absence of the document Sh1 at a predetermined specific height position from the top surface of the document discharge portion 22. The specific height is a height at which the amount of the documents Sh1 placed on the document discharge portion 22 reach the specified amount. That is, the full-load detection portion 5 is used to detect whether or not the amount of documents placed on the document discharge portion 22 has reached the specified amount. Hereinafter, the state in which the amount of the documents Sh1 on the document discharge portion 22 has reached the specified amount may be referred to as a full-load state.

More specifically, the full-load detection portion 5 is an optical sensor that includes a light emitting portion that emits light into the space above the document discharge portion 22 at the specific height position of the document discharge portion 22, and a light receiving portion that receives light from the space above the document discharge portion 22. When the height of the documents Sh1 placed on the document discharge portion 22 reaches the specific height, the light emitted from the light emitting portion is reflected by the documents Sh1, and a predetermined amount of light is received by the light receiving portion, the full-load detection portion 5 inputs an H signal to the control portion 15. In addition, the full-load detection portion 5 may also be another sensor such as an ultrasonic sensor or a contact sensor.

Note that the full-load detection portion 5 may be a distance sensor that measures the height from the document Sh1 on the document discharge portion 22 to the document placement portion 21. The distance sensor is arranged, for example, on a lower surface side of the document placement portion 21 and measures the height from the upper surface of the document Sh1 discharged onto the document discharge portion 22 to the lower surface of the document placement portion 21. The distance sensor is, for example, a non-contact sensor that utilizes reflection of light or ultrasonic waves. Thus, the control portion 15 is able to detect the amount of documents Sh1 placed on the document placement portion 21 based on the height detected by the distance sensor provided as the full-load detection portion 5.

In this type of document conveying apparatus 2, even when the amount of documents placed on the document discharge portion 22 has not yet reached the specified amount, there is a risk that it will be unnecessarily detected that the amount of documents placed on the document discharge portion 22 has reached the specified amount. For example, in the present embodiment, the specified amount is equal to or greater than the maximum placement amount. Therefore, even in a case in which all of the documents Sh1 placed on the document placement portion 21 are discharged to the document discharge portion 22 in a state in which no documents Sh1 are placed on the document discharge portion 22, the document discharge portion 22 should not be in the full-load state. However, due to curling of the documents Sh1 immediately after being discharged to the document discharge portion 22 or due to gaps between the documents Sh1, the document discharge portion 22 may temporarily be erroneously detected as being in the full-load state.

In a case in which such an unnecessary detection of the full-load state of the document discharge portion 22 occurs, the document conveying operation by the document conveying apparatus 2 may be stopped unnecessarily. However, in the image processing apparatus 10 and the document conveying apparatus 2 according to the present embodiment, as will be described below, it is possible to prevent the document conveying operation from being stopped unnecessarily.

More specifically, the document conveying apparatus 2 includes the document placement portion 21, the document discharge portion 22, the conveying mechanism 3, the document detection portion 4, the full-load detection portion 5, as well as a first detection processing portion 23, a second detection processing portion 24, and a stop processing portion 25. In the document conveying apparatus 2, the control portion 15 executes various types of processes in accordance with the control program, thereby functioning as the first detection processing portion 23, the second detection processing portion 24, and the stop processing portion 25. In the present embodiment, an apparatus including the document conveying apparatus 2 and the control portion 15 corresponds to the document conveying apparatus according to the present disclosure, and an apparatus including the document conveying apparatus 2 and the image reading portion 11 corresponds to the image processing apparatus according to the present disclosure. Note that an apparatus including the document conveying apparatus 2, the image reading portion 11, and the control portion 15 may be regarded as the image processing apparatus according to the present disclosure.

The first detection processing portion 23, using the document detection portion 4, executes a first detection step of detecting whether or not a document Sh1 is placed on the document discharge portion 22. More specifically, in a case in which an H signal is input from the document detection portion 4, the first detection processing unit 23 detects that a document Sh1 is placed on the document discharge portion 22, and when an L signal is input from the document detection portion 4, the first detection processing portion 23 detects that a document Sh1 is not placed on the document discharge portion 22.

In addition, the second detection processing portion 24, using the full-load detection portion 5, executes a second detection step of detecting whether or not the amount of documents Sh1 placed on the document discharge portion 22 has reached the specified amount. In the present embodiment, in the document conveying apparatus 2, as shown in FIG. 3, the discharge port 220 leading from the conveying mechanism 3 to the document discharge portion 22 is provided above the full-load detection portion 5. Therefore, in the document conveying apparatus 2, in a case in which the amount of documents Sh1 on the document discharge portion 22 has not reached the specified amount, a document Sh1 discharged to the document discharge portion 22 passes through the detection position by the full-load detection portion 5, and the document Sh1 is temporarily detected by the full-load detection portion 5. On the other hand, in the document conveying apparatus 2, in a case in which the amount of the documents Sh1 on the document discharge portion 22 has reached the specified amount, a state in which the document Sh1 discharged to the document discharge portion 22 is detected by the full-load detection section 5 continues. Therefore, the second detection processing portion 24 detects that the document discharge portion 22 is in a full-load state in a case in which the state in which a document Sh1 is detected by the full-load detection portion 5 continues for more than a preset time, that is, in a case in which the state in which an H signal is input from the full-load detection portion 5 continues for more than a preset time.

The stop processing portion 25 executes a preset stop process in a case in which the second detection processing portion 24 detects that the document discharge portion 22 is in a full-load state. The stop process is a process for stopping the conveying operation of the document Sh1 by the document conveying apparatus 2 or a job involving the conveying operation. In addition, the stop process may be a process that prevents the document conveying apparatus 2 from starting the conveying operation of the document Sh1. Furthermore, in the present embodiment, when the stop processing portion 25 executes the stop process, the stop processing portion 25 executes a notification process to notify the user that the document discharge portion 22 is in the full-load state. For example, in the notification process, a message to the effect that the document discharge portion 22 is in the full-load state is displayed on the operation display portion 14. Thus, by checking the message, the user can know that the conveying operation of the document Sh1 by the document conveying apparatus 2, or a job involving the conveying operation, has been stopped due to the full-load state.

### [Document Conveying Process]

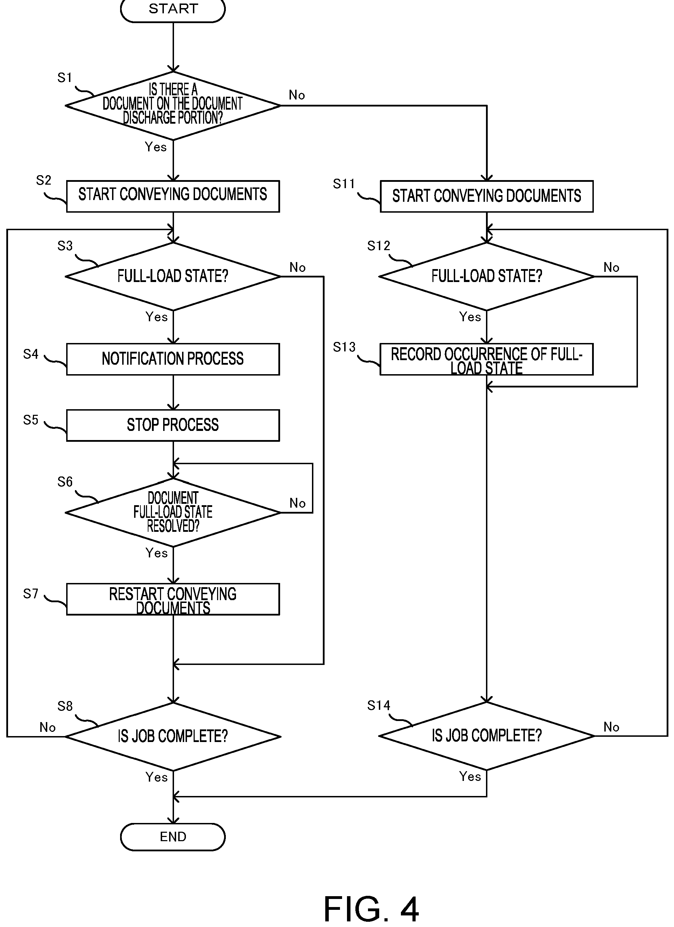

Hereinafter, a document conveying method executed by the image processing apparatus 10 according to the present embodiment, that is, a document conveying process executed by the control portion 15, will be described with reference to FIG. 4. Here, steps S1, S2, and so on in FIG. 4 represent numbers of processing procedures (steps) executed by the control portion 15. The control portion 15 mainly includes a computer system having one or more processors and one or more memories, and the one or more processors execute a control program to achieve the following processing.

The document conveying process is executed when the control portion 15 starts a specific job involving an automatic image reading process of reading an image from the document Sh1 that is conveyed by the conveying mechanism 3 from the document placement portion 21 through the image reading position P1 to the document discharge portion 22. For example, the specific job is a scanning job, a facsimile job, a copying job, or the like that involves the conveying process of the document Sh1 by the document placement portion 21. Note that details of the specific job executed by the control portion 15 may be the same as in a known case, and therefore a detailed description thereof will be omitted here.

### <Step S1>

In step S1, the stop processing portion 25 of the control portion 15 determines whether or not a document Sh1 is placed on the document discharge portion 22 when the specific job is started. More specifically, when the first detection processing portion 23 detects that a document Sh1 is placed on the document discharge portion 22, the stop processing portion 25 determines that a document Sh1 is placed on the document discharge portion 22. Here, when it is determined that a document Sh1 is placed (S1: Yes), the process proceeds to step S2, and when it is determined that the document Sh1 is not placed (S1: No), the process proceeds to step S11.

In this way, in a case in which the first detection processing portion 23 detects that a document Sh1 is placed on the document discharge portion 22 when the specific job is started, the stop processing portion 25, by moving the process to step S11, limits the execution of processing such as the notification process of step S4 and the stop process of S5 described below.

### <Step S2>

In step S2, the control portion 15 controls the document conveying apparatus 2 to start a document conveying process for conveying documents Sh1 placed on the document placement portion 21 in sequence.

### <Step S3>

In step S3, the stop processing portion 25 of the control portion 15 determines whether the document discharge portion 22 is in the full-load state. More specifically, the second detection processing portion 24 determines that the document discharge portion 22 is in the full-load state when the full-load detection portion 5 detects the document Sh1 for a preset period of time or longer. Here, when it is determined that the state is not the full-load state (S3: No), the process proceeds to step S8. On the other hand, when the state it is determined to be the full-load state (S3: Yes), the process proceeds to step S4.

### <Step S4>

In step S4, the stop processing portion 25 of the control portion 15 displays a message on the operation display portion 14 indicating that the document discharge portion 22 is in the full-load state, and executes a notification process to notify the user that the document discharge portion 22 is in the full-load state.

### <Step S5>

In step S5, the stop processing portion 25 of the control portion 15 executes a stop process for stopping the conveying operation of the document Sh1 by the document conveying apparatus 2. Note that step S5 is an example of a stopping step according to the present disclosure. In addition, in step S5, the stop processing portion 25 interrupts the conveying operation of the document Sh1 by the document conveying apparatus 2 and also interrupts the specific job executed by the control portion 15.

### <Step S6>

In step S6, the stop processing portion 25 of the control portion 15 determines whether or not the full-load state of the document discharge portion 22 has been resolved. More specifically, the stop processing portion 25 determines that the full-load state of the document discharge portion 22 has been resolved when a state in which the document Sh1 is not detected by the full-load detection portion 5 continues for a preset time or longer. When it is determined that the full-load state has been resolved (S6: Yes), the process proceeds to step S7, and the process waits in step S6 while the full-load state is not resolved (S6: No).

### <Step S7>

In step S7, the stop processing portion 25 of the control portion 15 causes the document conveying apparatus 2 to resume the conveying operation of the document Sh1. In addition, the stop processing portion 25 resumes the specific job executed by the control portion 15 when the document conveying apparatus 2 resumes the conveying operation of the document Sh1.

### <Step S8>

In step S8, the control portion 15 determines whether or not the specific job has been completed. For example, the control portion 15 determines that the specific job has been completed in a case in which the document placement detection portion (not shown) of the document placement portion 21 determines that a document Sh1 has not been detected, and the full-load detection portion 5 detects that the last document Sh1 has been discharged to the document discharge portion 22. Here, when it is determined that the specific job has been completed (S8: Yes), the document conveying process ends, and when it is determined that the specific job has not been completed (S8: No), the process returns to step S3.

### <Step S11>

On the other hand, in step S1, when it is determined that a document Sh1 is not placed on the document discharge portion 22 when the specific job is started (S1: No), the process proceeds to step S11. In step S11, the control portion 15 controls the document conveying apparatus 2 to start a document conveying process for conveying the documents Sh1 placed on the document placement portion 21 in sequence.

### <Step S12>

In step S12, the stop processing portion 25 of the control unit 15 determines whether the document discharge portion 22 is in a full-load state, similarly to step S3. Here, when it is determined that the state is not the full-load state (S12: No), the process proceeds to step S14. On the other hand, when the state is determined to be the full-load state (S12: Yes), the process proceeds to step S13.

### <Step S13>

In step S13, the stop processing portion 25 of the control portion 15 records in the storage portion that the document discharge portion 22 was in a full-load state during the execution of the specific job. Note that the record in the storage portion of the occurrence of the full-load state of the document discharge portion 22 is deleted by the control portion 15 when the full-load state of the document discharge portion 22 is resolved or when a specified confirmation operation is performed by the user.

### <Step S14>

In step S14, similarly to step S8, the control portion 15 determines whether or not the specific job has been completed. Here, when it is determined that the specific job has been completed (S14: Yes), the document conveying process ends. On the other hand, when it is determined that the specific job has not been completed (S14: No), the process returns to step S12.

In this way, in the present embodiment, in a case in which a document Sh1 is not placed on the document discharge portion 22 at the start of the specific job (S1: No), the stop processing portion 25 does not execute the notification process and stop process such as steps S4 and S5. That is, the stop processing portion 25 can execute the notification process and the stop process such as steps S4 and S5 only in a case in which a document Sh1 is placed on the document discharge portion 22 at the start of the specific job (S1: Yes). Therefore, in a case in which no document Sh1 is placed on the document discharge portion 22 at the start of the specific job (S1: No), the stop processing portion 25 will not execute the notification process and the stop process such as steps S4 and S5, even in a case in which the full-load state of the document discharge portion 22 is detected during execution of the specific job.

Therefore, in a case in which no document Sh1 is placed on the document discharge portion 22 at the start of the specific job, even in a case in which the document discharge portion 22 is unnecessarily detected as being in the full-load state, the conveying operation by the document conveying apparatus 2 will not be stopped, and thus it is possible to prevent the document conveying operation from being stopped unnecessarily.

Note that in the present embodiment, the maximum placement amount of the document placement portion 21 is equal to or greater than the specified amount of the document discharge portion 22, but in other embodiments, the maximum placement amount may be less than the specified amount. Even in this case, in a case in which no document Sh1 is placed on the document discharge portion 22 at the start of the specific job, the possibility of the state of the document discharge portion 22 becoming the full-load state during the execution of the specific job is lower than when a document Sh1 is placed on the document discharge portion 22 at the start of the specific job. Therefore, even when the maximum placement amount is less than the specified amount, it is possible to prevent the document conveying operation from being stopped unnecessarily due to unnecessary detection of the full-load state.

In addition, in the present embodiment, a case has been described in which the stop processing portion 25 does not execute the stop process even in a case in which the second detection processing portion 24 determines that the amount of documents placed on the document discharge portion 22 has reached the specified amount during execution of the specific job. On the other hand, in another embodiment, it is also possible for the stop processing portion 25 to limit the execution of the stop process by the second detection processing unit 24 not determine during execution of the specific job whether or not the amount of documents placed on the document discharge portion 22 has reached the specified amount.

Note that it is possible that a document Sh1 will added to the document placement portion 21 during the execution of the specific job. In this case, even in a case in which it is determined that no document Sh1 is placed on the document discharge portion 22 at the start of the specific job, it may be determined that the amount of documents Sh1 placed on the document discharge portion 22 has reached the specified amount during the execution of the specific job. Therefore, as another embodiment, the stop processing portion 25 may execute the stop process when a number of sheets of the documents Sh1 whose images are to be read in the specific job reaches a preset upper limit number in a case in which the amount of documents placed on the document discharge portion 22 is greater than the number corresponding to the specified amount.

### [Job Control Process]

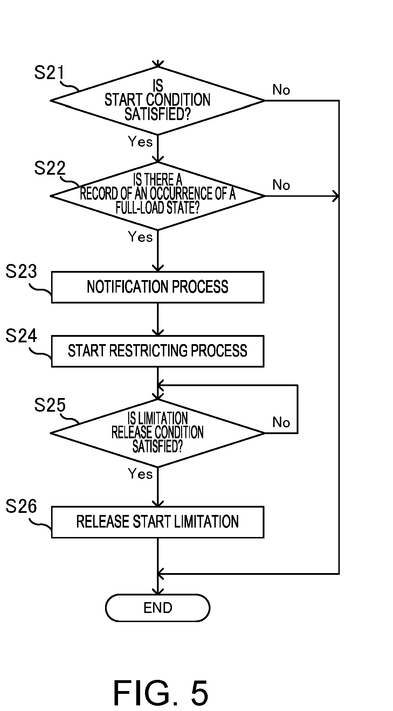

Next, a job control method executed by the image processing apparatus 10 according to the present embodiment, that is, a job control process executed by the control portion 15, will be described with reference to FIG. 5. Here, steps S21, S22, and so on in FIG. 5 represent numbers of processing procedures (steps) executed by the control portion 15. Note that the job control process is executed by the control portion 15 when the image processing apparatus 10 is powered on.

### <Step S21>

In step S21, the control portion 15 determines whether or not a preset start condition is satisfied. Here, when it is determined that the start condition is satisfied (S21: Yes), the process proceeds to step S22, and when it is determined that the start condition is not satisfied (S21: No), the job control process ends.

More specifically, the start condition is that the specific job that was being executed when a full-load state of the document discharge portion 22 occurred has ended. In addition, the start condition may be that a setting operation for the specific job involving the conveying of a document by the document conveying apparatus 2 has started. The start condition may be that a start request to start the specific job involving the conveying of a document by the document conveying apparatus 2 has been made. Furthermore, the start condition may be that a job other than the specific job is executed, or that the operation display portion 14 is operated, or the like. Moreover, the start condition may be that the document Sh1 is placed on the document placement portion 21 and detected by the document placement detection portion (not shown) of the document placement portion 21. The control portion 15 may be able to arbitrarily select the start condition from a plurality of start conditions that are preset in response to a user operation during initial setup of the image processing apparatus 10 or the like.

### <Step S22>

In step S22, the stop processing portion 25 of the control portion 15 determines whether or not the occurrence of the full-load state of the document discharge portion 22 has been recorded in the storage portion. Here, in a case in which the occurrence of the full-load state has been recorded (S22: Yes), the process proceeds to step S23, and in a case in which the occurrence of the full-load state has not been recorded (S22: No), the job control process ends.

### <Step S23>

In step S23, the stop processing portion 25 of the control portion 15 executes a notification process to notify that the full-load state of the document discharge portion 22 occurred in a specific job that was previously executed. More specifically, in the notification process, a message is displayed on the operation display portion 14 indicating that the full-load state of the document discharge portion 22 occurred in the specific job that was previously executed. Thus, it is possible to notify the user that the full-load state of the document discharge portion 22 occurred in the specific job that was previously executed.

For example, in a case in which the start condition is that the specific job that was being executed when the document discharge portion 22 was in the full-load state has ended, the notification process is executed at timing when the specific job has ended. In addition, in a case in which the start condition is that a start request has been performed to start the specific job involving conveying of the document by the document conveying apparatus 2, the notification process is executed after the end of the specific job that was being executed when the state of the document discharge portion 22 became the full-load state and at timing when a start request has been made to start a new specific job.

### <Step S24>

In step S24, the control portion 15 executes a start limitation process for limiting the start of execution of a job. More specifically, the control portion 15 executes the start limitation process that is preset depending on the content of the start condition that is determined to be satisfied in step S21.

For example, in a case in which the start condition is that a setting operation for the specific job involving the conveying of a document by the document conveying apparatus 2 has been started (for example, when the specific job is selected as the job type), the start limitation process is a process that refuses to accept the setting operation for the specific job. In addition, in a case in which the start condition is that a start request has been made for the specific job involving the conveying of a document by the document conveying apparatus 2, the start limitation process is a process of waiting without starting the specific job. Similarly, even in a case in which the placement of the document Sh1 on the document placement portion 21 is detected by the document detection portion (not shown) of the document placement portion 21, the start limitation process is a process of waiting without starting the specific job. According to these configurations, it is possible to prevent the specific job from being executed while the document discharge portion 22 remains in the full-load state. On the other hand, other jobs that do not involve the conveying of documents by the document conveying apparatus 2 can be executed.

In addition, even in a case in which the start condition is that a job other than the specific job is executed, the start limitation process may be a process of waiting without starting the other job. Note that even in a case in which the start condition is that the specific job that was being executed when the document discharge portion 22 was in the full-load state has ended, the start limitation process may be a process that causes the next specific job or the other job to wait without starting.

In addition, in a case in which the start condition is that an operation has been performed on the operation display portion 14, the start limitation process is a process of refusing to receive any operation other than a confirmation operation, which will be described later, on the operation display portion 14. Thus, it is possible for the user to more reliably confirm that the full-load state of the document discharge portion 22 occurred in the specific job that was previously executed.

### <Step S25>

In step S25, the control portion 15 determines whether or not a preset limitation release condition for ending the start limitation process is satisfied. For example, the limitation release condition is that a predetermined confirmation operation is performed by the user on the operation display portion 14. In addition, the limitation release condition may be that a preset time has elapsed after the notification process of step S23 has been executed. Moreover, the limitation release condition may be that a state in which the full-load detection portion 5 does not detect the document Sh1 is detected for a preset period of time or longer, that is, the full-load state of the document discharge portion 22 is resolved. Note that in another embodiment, in a case in which the full-load state of the document discharge portion 22 has been resolved, the job control process may not be executed.

When it is determined that the limitation release condition is satisfied (S25: Yes), the process proceeds to step S26, and the process waits in step S25 while the limitation release condition is not satisfied (S25: No).

### <Step S26>

In step S26, the control portion 15 ends the start limitation process started in step S24. Thus, it is possible to execute the specific job, for example.

In this way, in the image processing apparatus 10, in a case in which the full-load state of the document discharge portion 22 occurs during the execution of the specific job and the specific job ends without any notification of this, the fact that the full-load state has occurred is notified at a preset timing thereafter, such as the timing when the start condition is satisfied.

### [Supplementary Notes]

Below, an outline of the disclosure extracted from the above-described embodiments will be added. The configurations and processing functions described in the following supplementary notes can be selected and combined as desired.

### <Supplementary Note 1>

A document conveying apparatus, including:
a conveying mechanism configured to convey documents placed on a document placement portion to a document discharge portion in sequence through an image reading position where images are read from the documents in a specific job;
a first detection processing portion configured to detect whether or not a document is placed on the document discharge portion;
a second detection processing portion configured to detect whether or not an amount of documents placed on the document discharge portion has reached a preset specified amount; and
a stop processing portion configured to execute a stop process to stop a document conveying operation by the conveying mechanism when the second detection processing portion determines that the amount of the documents placed on the document discharge portion has reached the specified amount; wherein
the stop processing portion, in a case in which the first detection processing portion detects that no document is placed on the document discharge portion when the specific job is started, limits execution of the stop process during execution of the specific job.

### <Supplementary Note 2>

The document conveying apparatus according to Supplementary Note 1, wherein
the specified amount is equal to or greater than a maximum placement amount that is predetermined as an amount that can be placed on the document placement portion.

### <Supplementary Note 3>

The document conveying apparatus according to Supplementary Note 1 or 2, wherein
the stop processing portion, in a case in which the second detection processing portion determines that the amount of documents placed on the document discharge portion has reached the specified amount, executes a notification process to notify that the document discharge portion is in a full-load state.

### <Supplementary Note 4>

The document conveying apparatus according to Supplementary Note 3, wherein
the stop processing portion, in a case in which the second detection processing portion determines that the amount of documents placed on the document discharge portion has reached the specified amount during execution of the specific job, executes the notification process at a timing when the specific job is completed and a preset condition is satisfied.

### <Supplementary Note 5>

The document conveying apparatus according to any one of Supplementary Notes 1 to 4, wherein
the stop processing portion, in a case in which the first detection processing portion detects that no document is placed when the specific job is started, does not execute the stop process even in a case in which the second detection processing portion determines that the amount of documents placed on the document discharge portion has reached the specified amount during execution of the specific job.

### <Supplementary Note 6>

An image processing apparatus, including:
a document conveying apparatus according to any one of Supplementary Notes 1 to 5; and
an image reading portion configured to read an image from a document conveyed by the document conveying apparatus.

### <Supplementary Note 7>

An image conveying method, wherein
one or a plurality of processors configured to control a document conveying apparatus including a conveying mechanism configured to convey documents placed on a document placement portion to a document discharge portion in sequence through an image reading position where images are read from the documents in a specific job includes:
a first detection step of detecting whether or not a document is placed on the document discharge portion;
a second detection step of detecting whether or not an amount of documents placed on the document discharge portion has reached a preset specified amount; and
a stopping step of, in a case in which it is determined in the second detection step that the amount of the documents placed on the document discharge portion has reached the specified amount, executing a stop process of stopping a document conveying operation by the conveying mechanism; wherein
the stopping step, in a case in which the first detection step detects that no document is placed on the document discharge portion when the specific job is started, limits execution of the stop process during execution of the specific job.

It is to be understood that the embodiments herein are illustrative and not restrictive, since the scope of the disclosure is defined by the appended claims rather than by the description preceding them, and all changes that fall within metes and bounds of the claims thereof are therefore intended to be embraced by the claims.

## Claims

1. A document conveying apparatus (2), comprising:
a conveying mechanism (3) configured to convey documents (Sh1) placed on a document placement portion (21) to a document discharge portion (22) in sequence through an image reading position (P1) where images are read from the documents (Sh1) in a specific job;
a first detection processing portion (23) configured to detect whether or not a document (Sh1) is placed on the document discharge portion (22);
a second detection processing portion (24) configured to detect whether or not an amount of documents (Sh1) placed on the document discharge portion (22) has reached a preset specified amount; and
a stop processing portion (25) configured to execute a stop process to stop a document (Sh1) conveying operation by the conveying mechanism (3) when the second detection processing portion (24) determines that the amount of the documents (Sh1) placed on the document discharge portion (22) has reached the specified amount; wherein
the stop processing portion (25), in a case in which the first detection processing portion (23) detects that no document (Sh1) is placed on the document discharge portion (22) when the specific job is started, limits execution of the stop process during execution of the specific job.

2. The document conveying apparatus (2) according to claim 1, wherein
the specified amount is equal to or greater than a maximum amount that is predetermined as an amount that can be placed on the document placement portion (21).

3. The document conveying apparatus (2) according to claim 1 or 2, wherein
the stop processing portion (25), in a case in which the second detection processing portion (24) determines that the amount of documents (Sh1) placed on the document discharge portion (22) has reached the specified amount, executes a notification process to notify that the document discharge portion (22) is in a full-load state.

4. The document conveying apparatus (2) according to claim 3, wherein
the stop processing portion (25), in a case in which the second detection processing portion (24) determines that the amount of documents (Sh1) placed on the document discharge portion (22) has reached the specified amount during execution of the specific job, executes the notification process at a timing when the specific job is completed and a preset condition is satisfied.

5. The document conveying apparatus (2) according to any one of claims 1 to 4, wherein
the stop processing portion (25), in a case in which the first detection processing portion (23) detects that no document (Sh1) is placed when the specific job is started, does not execute the stop process even in a case in which the second detection processing portion (24) determines that the amount of documents placed on the document discharge portion (22) has reached the specified amount during execution of the specific job.

6. An image processing apparatus (10), comprising:
the document conveying apparatus (2) according to any one of claims 1 to 5, and
an image reading portion (11) configured to read an image from a document (Sh1) conveyed by the document conveying apparatus (2).

7. An image conveying method, wherein
one or a plurality of processors configured to control a document conveying apparatus (2) comprising a conveying mechanism (3) configured to convey documents (Sh1) placed on a document placement portion (21) to a document discharge portion (22) in sequence through an image reading position where images are read from the documents (Sh1) in a specific job comprises:
a first detection step of detecting whether or not a document (Sh1) is placed on the document discharge portion (22);
a second detection step of detecting whether or not an amount of documents (Sh1) placed on the document discharge portion (22) has reached a preset specified amount; and
a stopping step of, in a case in which it is determined in the second detection step that the amount of the documents (Sh1) placed on the document discharge portion (22) has reached the specified amount, executing a stop process of stopping a document (Sh1) conveying operation by the conveying mechanism (3); wherein
the stopping step, in a case in which the first detection step detects that no document (Sh1) is placed on the document discharge portion (22) when the specific job is started, limits execution of the stop process during execution of the specific job.

## Patentansprüche

1. Dokumentfördervorrichtung (2), umfassend:
einen Fördermechanismus (3), der so ausgebildet ist, dass er auf einem Dokumentenplatzierungsabschnitt (21) platzierte Dokumente (Sh1) nacheinander durch eine Bildleseposition (P1), wo in einem spezifischen Auftrag Bilder von den Dokumenten (Sh1) gelesen werden, zu einem Dokumentenausgabeabschnitt (22) fördert;
einen ersten Detektionsverarbeitungsabschnitt (23), der so ausgebildet ist, dass er detektiert, ob ein Dokument (Sh1) auf dem Dokumentenausgabeabschnitt (22) platziert ist oder nicht;
einen zweiten Detektionsverarbeitungsabschnitt (24), der so ausgebildet ist, dass er detektiert, ob eine Anzahl der auf dem Dokumentenausgabeabschnitt (22) platzierten Dokumente (Sh1) eine voreingestellte spezifizierte Anzahl erreicht hat oder nicht; und
einen Stoppverarbeitungsabschnitt (25), der so ausgebildet ist, dass er einen Stoppvorgang ausführt, um einen Dokumenten- (Sh1) Fördervorgang durch den Fördermechanismus (3) zu stoppen, wenn der zweite Detektionsverarbeitungsabschnitt (24) bestimmt, dass die Anzahl der auf dem Dokumentenausgabeabschnitt (22) platzierten Dokumente (Sh1) eine spezifizierte Anzahl erreicht hat; wobei
der Stoppverarbeitungsabschnitt (25) in einem Fall, in dem der erste Detektionsverarbeitungsabschnitt (23) detektiert, dass bei Start des spezifischen Auftrags kein Dokument (Sh1) auf dem Dokumentenausgabeabschnitt (22) platziert ist, die Ausführung des Stoppvorgangs während der Ausführung des spezifischen Auftrags einschränkt.

2. Dokumentfördervorrichtung (2) nach Anspruch 1, wobei
die spezifizierte Anzahl gleich oder größer ist als eine maximale Anzahl, die als eine Anzahl, die auf dem Dokumentenplatzierungsabschnitt (21) platziert werden kann, vorbestimmt ist.

3. Dokumentfördervorrichtung (2) nach Anspruch 1 oder 2, wobei
der Stoppverarbeitungsabschnitt (25) in einem Fall, in dem der zweite Detektionsverarbeitungsabschnitt (24) bestimmt, dass die Anzahl der auf dem Dokumentenausgabeabschnitt (22) platzierten Dokumente (Sh1) eine spezifizierte Anzahl erreicht hat, einen Benachrichtigungsvorgang ausführt, um darüber zu benachrichtigen, dass sich der Dokumentenausgabeabschnitt (22) in einem vollbeladenen Zustand befindet.

4. Dokumentfördervorrichtung (2) nach Anspruch 3, wobei
der Stoppverarbeitungsabschnitt (25) in einem Fall, in dem der zweite Detektionsverarbeitungsabschnitt (24) bestimmt, dass die Anzahl der auf dem Dokumentenausgabeabschnitt (22) platzierten Dokumente (Sh1) während der Ausführung des spezifischen Auftrags die spezifizierte Anzahl erreicht hat, den Benachrichtigungsvorgang zu einem Zeitpunkt ausführt, zu dem der spezifische Auftrag abgeschlossen ist und eine voreingestellte Bedingung erfüllt ist.

5. Dokumentfördervorrichtung (2) nach einem der Ansprüche 1 bis 4, wobei
der Stoppverarbeitungsabschnitt (25) in einem Fall, in dem der erste Detektionsverarbeitungsabschnitt (23) detektiert, dass bei Start des spezifischen Auftrags kein Dokument (Sh1) platziert ist, den Stoppvorgang auch dann nicht ausführt, wenn der zweite Detektionsverarbeitungsabschnitt (24) bestimmt, dass die Anzahl der auf dem Dokumentenausgabeabschnitt (22) platzierten Dokumente während der Ausführung des spezifischen Auftrags die spezifizierte Anzahl erreicht hat.

6. Bildverarbeitungsvorrichtung (10), umfassend:
die Dokumentenfördervorrichtung (2) nach einem der Ansprüche 1 bis 5, und
einen Bildleseabschnitt (11), der so ausgebildet ist, dass er ein Bild von einem Dokument (Sh1) liest, das von der Dokumentenfördervorrichtung (2) gefördert wird.

7. Bildförderverfahren, wobei
ein oder eine Vielzahl von Prozessoren, die so ausgebildet sind, dass sie eine Dokumentfördervorrichtung (2) steuern, die einen Fördermechanismus (3) umfasst, der so ausgebildet ist, dass er auf einem Dokumentenplatzierungsabschnitt (21) platzierte Dokumente (Sh1) nacheinander durch eine Bildleseposition, wo in einem spezifischen Auftrag Bilder von den Dokumenten (Sh1) gelesen werden, zu einem Dokumentenausgabeabschnitt (22) fördert, umfasst:
einen ersten Detektionsschritt, bei dem detektiert wird, ob ein Dokument (Sh1) auf dem Dokumentenausgabeabschnitt (22) platziert ist oder nicht;
einen zweiten Detektionsschritt, bei dem detektiert wird, ob eine Anzahl von Dokumenten (Sh1), die auf dem Dokumentenausgabeabschnitt (22) platziert sind, eine voreingestellte spezifische Anzahl erreicht hat oder nicht; und
einen Stoppschritt, bei dem in einem Fall, in dem in dem zweiten Detektionsschritt bestimmt wird, dass die Anzahl der auf dem Dokumentenausgabeabschnitt (22) platzierten Dokumente (Sh1) die spezifische Anzahl erreicht hat, ein Stoppvorgang des Stoppens eines Dokumenten- (Sh1) Fördervorgangs durch den Fördermechanismus (3) ausgeführt wird; wobei
der Stoppschritt in einem Fall, in dem der erste Detektionsschritt detektiert, dass bei Start des spezifischen Auftrags kein Dokument (Sh1) auf dem Dokumentenausgabeabschnitt (22) platziert ist, die Ausführung des Stoppvorgangs während der Ausführung des spezifischen Auftrags einschränkt.

## Revendications

1. Appareil de transport de documents (2), comprenant :
un mécanisme de transport (3) configuré pour acheminer des documents (Sh1) placés sur une partie de placement (21) de documents vers une partie d'éjection (22) de documents de manière séquentielle via une position de lecture d'images (P1) où des images sont lues à partir des documents (Sh1) dans une tâche particulière ;
une première partie de traitement de détection (23) configurée pour détecter si un document (Sh1) est ou non placé sur la partie d'éjection (22) de documents ;
une seconde partie de traitement de détection (24) configurée pour détecter si une quantité de documents (Sh1) placés sur la partie d'éjection (22) de documents a atteint ou non une quantité spécifiée préétablie ; et
une partie de traitement d'arrêt (25) configurée pour exécuter un processus d'arrêt afin d'arrêter une opération de transport de documents (Sh1) par le mécanisme de transport (3) lorsque la seconde partie de traitement de détection (24) détermine que la quantité des documents (Sh1) placés sur la partie d'éjection (22) de documents a atteint la quantité spécifiée ; dans lequel
la partie de traitement d'arrêt (25), dans un cas où la première partie de traitement de détection (23) détecte qu'aucun document (Sh1) n'est placé sur la partie d'éjection (22) de documents lorsque la tâche particulière est démarrée, limite l'exécution du processus d'arrêt pendant l'exécution de la tâche particulière.

2. Appareil de transport de documents (2) selon la revendication 1, dans lequel
la quantité spécifiée est égale ou supérieure à une quantité maximale qui est préétablie en tant que quantité qui peut être placée sur la partie de placement (21) de documents.

3. Appareil de transport de documents (2) selon la revendication 1 ou 2, dans lequel
la partie de traitement d'arrêt (25), dans un cas où la seconde partie de traitement de détection (24) détermine que la quantité de documents (Sh1) placés sur la partie d'éjection (22) de documents a atteint la quantité spécifiée, exécute un processus de notification pour signaler que la partie d'éjection (22) de documents est dans un état de pleine charge.

4. Appareil de transport de documents (2) selon la revendication 3, dans lequel
la partie de traitement d'arrêt (25), dans un cas où la seconde partie de traitement de détection (24) détermine que la quantité de documents (Sh1) placés sur la partie d'éjection (22) de documents a atteint la quantité spécifiée pendant l'exécution de la tâche particulière, exécute le processus de notification à un moment où la tâche particulière est achevée et une condition préétablie est remplie.

5. Appareil de transport de documents (2) selon l'une quelconque des revendications 1 à 4, dans lequel
la partie de traitement d'arrêt (25), dans un cas où la première partie de traitement de détection (23) détecte qu'aucun document (Sh1) n'est placé lorsque la tâche particulière est démarrée, n'exécute pas le processus d'arrêt même dans un cas où la seconde partie de traitement de détection (24) détermine que la quantité de documents placés sur la partie d'éjection (22) de documents a atteint la quantité spécifiée pendant l'exécution de la tâche particulière.

6. Appareil de traitement d'images (10), comprenant :
l'appareil de transport de documents (2) selon l'une quelconque des revendications 1 à 5, et
une partie de lecture d'images (11) configurée pour lire une image à partir d'un document (Sh1) acheminé par le dispositif de transport de documents (2).

7. Procédé de transport d'images, dans lequel
un ou une pluralité de processeurs configurés pour commander un appareil de transport de documents (2) comprenant un mécanisme de transport (3) configuré pour acheminer des documents (Sh1) placés sur une partie de placement (21) de documents vers une partie d'éjection (22) de documents de manière séquentielle via une position de lecture d'images où des images sont lues à partir des documents (Sh1) dans une tâche particulière comprennent :
une première étape de détection consistant à détecter si un document (Sh1) est ou non placé sur la partie d'éjection (22) de documents ;
une seconde étape de détection consistant à détecter si une quantité de documents (Sh1) placés sur la partie d'éjection (22) de documents a atteint ou non une quantité spécifiée préétablie ; et
une étape d'arrêt consistant, dans un cas où il est déterminé dans la seconde étape de détection que la quantité des documents (Sh1) placés sur la partie d'éjection (22) de documents a atteint la quantité spécifiée, à exécuter un processus d'arrêt consistant à arrêter une opération de transport de documents (Sh1) par le mécanisme de transport (3) ; dans lequel
l'étape d'arrêt, dans un cas où la première étape de détection détecte qu'aucun document (Sh1) n'est placé sur la partie d'éjection (22) de documents lorsque la tâche particulière est démarrée, limite l'exécution du processus d'arrêt pendant l'exécution de la tâche particulière.
